# FASCICULE DE BREVET EUROPEEN

(11) **EP 1 157 870 B1**
(45) Date de publication et mention de la délivrance du brevet: **06.01.2010**
(21) Numéro de dépôt: 01460026.6
(22) Date de dépôt: 25.04.2001
(51) Int. Cl.: B60J 1/20

(54) **Store à enrouleur à barre de tirage mobile axialement**
Fensterrollo mit axial beweglicher Zugleiste
Roller blind with axially mobile pull bar

(30) Priorité: 19.05.2000 FR 0006473
(43) Date de publication de la demande: 28.11.2001
(73) Titulaire: Wagon SAS, 79300 Bressuire (FR)
(72) Inventeur: Moreau, Stéphane, 35700 Cravant Les Coteaux (FR)
(74) Mandataire: Vidon, Patrice

(56) Documents cités:
- EP-A- 0 377 929
- DE-A- 19 835 257
- DE-A- 19 839 078
- DE-U- 9 010 881
- US-A- 4 836 263

## Description

Le domaine de l'invention est celui des stores à enrouleur, notamment pour véhicule automobile. Plus précisément, l'invention concerne les stores à enrouleur, dans lesquels au moins une biellette assure le guidage et/ou le maintien de la toile en position déployée.

Classiquement, un store à enrouleur présente une toile, ou rideau, formant écran, en position déployée, devant une baie vitrée. La toile est susceptible d'être déroulée ou enroulée au travers d'une fente ménagée dans l'habillage intérieure ou la tablette arrière d'un véhicule.

Une des extrémités de la toile est montée sur une rouleau, ou tube enrouleur, mobile en rotation. L'autre extrémité de la toile est munie d'une barre de tirage.

En position reployée, la toile est essentiellement enroulée autour du tube d'enroulement, et la barre de tirage vient, par exemple, en appui sur l'habillage intérieur ou sur la tablette arrière du véhicule.

Les stores de ce type, actionnés manuellement, sont parfois associés à des biellettes susceptibles de maintenir, en position déployée, la toile en position d'occultation devant la baie vitrée. La ou les biellettes sont ainsi mobiles entre une position où elles sont sensiblement parallèles au tube enrouleur et une position où elles sont sensiblement perpendiculaires au tube enrouleur. Les biellettes peuvent être remplacées par des moyens assurant la même fonction (croisillons, compas, pistons...). Des moyens de rappel agissent sur le tube d'enroulement, de façon que le réenroulement de la toile se fasse dans de bonnes conditions.

Dans les stores motorisés, on prévoit également souvent la présence d'une ou plusieurs biellettes de guidage de la barre de tirage, ou de moyens similaires, assurant le guidage et le maintien de l'écran en position déployée, le déplacement de la ou des biellettes étant cette fois assuré par un moteur, provoquant l'enroulement ou le déploiement de la toile.

En général, la barre de tirage forme, ou porte, un élément d'obturation de la fente par laquelle passent la toile et les biellettes. Pour obtenir une obturation correcte, il est nécessaire que l'élément d'obturation soit parallèle au plan de l'élément portant la fente (classiquement une tablette). En conséquence, selon l'art antérieur, les biellettes doivent se déployer dans un plan perpendiculaire au plan de la fente. Cela peut poser parfois des problèmes de mise en place et de bon fonctionnement.

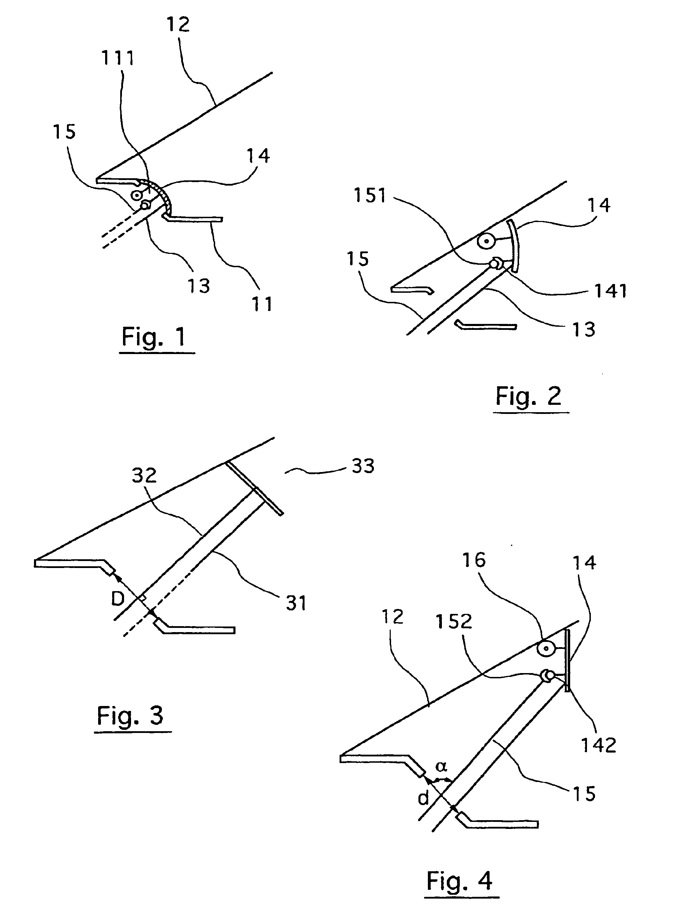

En outre, lorsque la vitre à occulter forme un plan incliné (cas notamment d'une vitre arrière de véhicule), il est courant que la barre de tirage vienne en appui contre la vitre, lorsque la toile est déployée (voir figure 3, commentée plus en détail par la suite). Pour obtenir le contact avec la vitre, en position déployée, il est nécessaire de prévoir une fente de largeur importante (D).

La toile étant déployée, la fente présente alors un passage important pour la poussière ou de petits objets susceptibles de bloquer ou détériorer le mécanisme du store. Cette ouverture importante est de plus inesthétique.

En outre, lorsque la toile est totalement enroulée, la barre de tirage doit pouvoir occulter totalement la fente de l'habillage ou de la tablette. La barre de tirage sera d'autant plus volumineuse que la fente est large, ce qui engendre tant des inconvénients pratiques qu'esthétique

Le document DE-19835257 concerne un store à biellettes muni d'éléments de guidage, sous la forme de roulettes, qui sont montés mobiles sur la barre de tirage et maintiennent celle-ci à distance de la vitre arrière d'un véhicule, en roulant sur cette dernière.

Le document DE-901 0881 U, représentant l'état de la technique le plus proche, décrit un store enrouleur pour véhicules automobiles comprenant un bras de maintien du store en position déployée. Un tel système permet d'ajuster le store à l'inclinaison de la vitre à occulter.

En conséquence, l'invention a notamment pour objectif de pallier ces inconvénients de l'art antérieur.

Plus précisément, l'invention a notamment pour objectif de fournir un store à enrouleur, du type comprenant une ou plusieurs biellettes de guidage et/ou de maintien, qui permette de limiter la largeur de la fente, et donc notamment de limiter les possibilités de passage intempestif d'objets à travers la fente d'un habillage intérieur ou d'une tablette arrière de véhicule, tout en permettant un contact avec la vitre, en position déployée.

Un autre objectif de l'invention est de fournir un tel store dont la barre de tirage présente un encombrement moindre par rapport à l'art antérieur.

Encore un autre objectif de l'invention est de fournir un tel store offrant une certaine tolérance du positionnement de la barre de tirage.

Un autre objectif de l'invention est de permettre la mise en appui du store contre une baie de façon optimisée.

L'invention a également pour objectif de fournir un tel store qui soit simple et peu coûteux à fabriquer et à monter.

Ces objectifs, ainsi que d'autres qui apparaîtront par la suite, sont atteints à l'aide d'un store à enrouleur, du type présentant un rideau dont une première extrémité est solidaire d'un tube enrouleur et une seconde extrémité est solidaire d'une barre de tirage, le déplacement et/ou le maintien de ladite barre de tirage se faisant sous l'action d'au moins une biellette. Selon l'invention, ladite barre de tirage est susceptible de prendre au moins deux positions distinctes autour de son axe longitudinal ou d'un axe sensiblement parallèle à celui-ci.

En d'autres termes, la position de la barre de tirage peut varier, par rapport au plan défini par la toile déployée, selon que la toile est repliée (barre en contact avec son support) ou déployée (barre en contact avec la vitre).

Selon une caractéristique particulièrement avantageuse, ladite barre et ladite biellette comprennent des moyens qui coopèrent de façon à former une liaison à pivot glissant entre ladite barre et ladite biellette.

La barre de tirage est ainsi mobile à pivotement entre une position où elle se trouve en appui sur l'habillage ou la tablette, et une position correspondant à un état de déploiement du store dans laquelle elle est inclinée par rapport au plan de l'habillage ou de la tablette, de façon à être en appui, directement ou par l'intermédiaire de moyens qu'elle porte, contre la baie vitrée.

Selon un premier mode de réalisation préférentiel de l'invention, l'extrémité libre de ladite ou desdites biellettes présente un coulisseau susceptible de coulisser et de pivoter dans une glissière ménagée dans ladite barre de tirage.

Selon un second mode de réalisation préférentiel, symétrique du premier, l'extrémité libre de ladite ou desdites biellettes forme un U susceptible de coulisser et de pivoter sur un bourrelet longitudinal de section sensiblement arrondie, formé sur ladite barre de tirage.

Selon une autre caractéristique avantageuse de l'invention, ladite barre de tirage et/ou la ou lesdites biellettes comprennent des moyens d'appui sur ledit panneau vitré et/ou sur un élément de carrosserie. Le store se trouve ainsi dans une position stable une fois totalement déployé.

Il est souvent souhaitable qu'une fois en appui contre la baie vitrée, la barre de tirage puisse poursuivre facilement son déplacement si nécessaire. Pour atteindre cet objectif, lesdits moyens d'appui comprennent de façon avantageuse au moins une roulette et/ou au moins un patin.

L'invention s'applique avantageusement aux stores motorisés. Elle peut également être adaptées.

Selon une solution préférée, la ou lesdites biellettes sont ainsi actionnées par un moteur.

D'autres caractéristiques et avantages de l'invention apparaîtront plus clairement à la lecture de la description suivante de deux modes de réalisation préférentiels de l'invention, donnés à titre d'exemple illustratifs et non limitatifs, et des dessins annexés parmi lesquels :
- la figure 1 illustre un store selon l'invention en position enroulée, selon un premier mode de réalisation ;
- la figure 2 représente le store de la figure 1 en cours de déroulement de la toile ;
- la figure 3 représente un store en position déroulée selon l'art antérieur ;
- la figure 4 illustre un store en position déroulée selon un deuxième mode de réalisation, à comparer à celui de la figure 3.

Le principe général de l'invention repose donc sur la liaison mécanique entre la barre de tirage et la ou les biellettes, permettant le coulissement de l'extrémité de la ou des biellettes le long de la barre de tirage, tout en autorisant le pivotement de la barre de tirage par rapport à sa position d'occultation de la fente.

La figure 1 représente un store à enrouleur monté sous l'habillage intérieur 11 d'un véhicule, susceptible d'être déployée devant une baie vitrée 12, au travers d'une fente 111.

Une extrémité de la toile 13 est solidarisée à un tube enrouleur (non représenté) tandis que l'autre est solidaire d'une barre de tirage 14.

Le store comprend en outre une ou plusieurs (classiquement deux) biellettes 15 de guidage et/ou de maintien de la toile 13 en position déployée.

Selon un premier mode de réalisation représenté sur la figure 2, la barre de tirage 14 est solidaire d'une glissière 141, présente une section en portion de cercle. Chaque biellette 15 porte en son extrémité un coulisseau 151, destiné à être mis en place dans la glissière 141.

De cette façon, les biellettes 15, passant d'une position dans laquelle elles sont sensiblement parallèles au tube d'enroulement et à la barre de tirage 14, à une position dans laquelle elles sont sensiblement perpendiculaires au tube d'enroulement et à la barre de tirage, peuvent coulisser le long de la glissière 141 au fur et à mesure du déploiement ou de l'enroulement de la toile 13, tandis que la barre de tirage 14 peut pivoter autour de l'axe passant par les coulisseaux 15.

Les figures 3 et 4 permettent de bien distinguer les avantages de l'invention. Sur la figure 3, on a représenté un store comprenant des biellettes selon les techniques traditionnelles de l'art antérieur. On remarque que, quelque soit l'état de déploiement de la toile 31, les biellettes 32 restent perpendiculaires à la barre de tirage 33, selon la vue en coupe telle qu'illustrée.

Dans ce type de réalisation, la barre de tirage venant prendre appui sur la baie vitrée approximativement à la fin du déploiement de la toile, la barre de tirage doit avoir une de section transversale couvrant une largeur D importante, telle que mentionnée.

Sur la figure 4 illustrant un second mode de réalisation de l'invention, la barre de tirage 14 porte un bourrelet 142 de section sensiblement arrondie. Les biellettes 15 présentent une terminaison 1152 en forme de U, destiné à recevoir le bourrelet 142 et à coulisser sur celui-ci. Cette liaison permet à la barre de tirage de pivoter autour de l'axe formé par le bourrelet 142.

Ainsi, l'angle α formé par la biellette 15 et le plan de la fente 111 n'est plus nécessairement à angle droit, la barre de tirage revenant automatiquement dans le plan de la fente en prenant appui sur l'habillage ou la tablette.

De cette façon, comme dans le premier mode de réalisation, on obtient une largeur de fente d inférieure à la distance D de la figure 3. Avantageusement, la barre de tirage porte des moyens d'appui 16, tels que des roulettes ou des patins, qui viennent en appui contre la baie vitrée 12.

Le déploiement est donc assuré vers la baie vitrée de façon optimisée par rapport à la technique de la figure 3. En effet, les biellettes peuvent par exemple être orientées de façon à ce que la barre de tirage vienne en appui plus tôt contre la baie vitrée, par l'intermédiaire des roulettes 16, Le déroulement se poursuivra de ce fait de façon plus stable.

Au fur et à mesure du déploiement et du déplacement des roulettes 16 contre la baie vitrée 12, la barre de tirage adapte son inclinaison automatiquement en fonction de la distance qui sépare l'extrémité de la biellette et la baie vitrée.

Les moyens d'appui de la barre de tirage contre la baie vitré sont donc susceptibles de s'écarter par rapport aux extrémités de biellettes. Ce résultat est particulièrement avantageux lors de la mise en appui, mais aussi lorsque le store est totalement enroulée, pour pouvoir passer au travers d'une fente sans nécessiter d'en augmenter la largeur.

L'invention s'applique aux stores actionnés manuellement : l'utilisateur tire la barre 14 pour dérouler la toile et intervient sur les biellettes pour les bloquer de façon à maintenir la toile en position d'occultation.

Selon une solution préférée, l'utilisateur intervient sur une commande déclenchant au moins un moteur qui actionne le déplacement des biellettes, qui poussent progressivement la barre de tirage et déroule par conséquent la toile. La motorisation peut également entraîner le rouleau, les biellettes assurant essentiellement alors les fonctions de guidage et de maintien.

Bien entendu, la ou les biellettes peuvent être remplacées par tout type de moyens adéquats susceptibles d'assurer la même fonction, tels qu'un compas (correspondant à une biellette articulée), un croisillon ou un piston.

## Revendications

1. Store à enrouleur, du type présentant un rideau (13) dont une première extrémité est solidaire d'un tube enrouleur et une seconde extrémité est solidaire d'une barre de tirage (14), le déplacement et/ou le maintien de ladite barre de tirage (14) se faisant sous l'action d'au moins une biellette (15),
ladite barre de tirage (14) étant susceptible de prendre au moins deux positions distinctes autour de son axe longitudinal ou d'un axe sensiblement parallèle à celui-ci,
**caractérisé en ce que** ladite barre (14) et ladite biellette (15) comprennent des moyens de liaison coopérant de façon à former une liaison à pivot glissant entre ladite barre et ladite biellette autour de l'axe longitudinal de ladite-barre de tirage (14) ou d'un axe sensiblement parallèle.

2. Store à enrouleur selon la revendication 1, **caractérisé en ce qu'**une extrémité de ladite ou desdites biellettes (15) présente un coulisseau (151) susceptible de coulisser et de pivoter dans une glissière (141) ménagées dans ladite barre de tirage (14).

3. Store à enrouleur selon la revendication 1, **caractérisé en ce qu'**une extrémité de ladite ou desdites biellettes forme un U (152) susceptible de coulisser et de pivoter sur un bourrelet longitudinal (142) de section sensiblement arrondie, formé sur ladite barre de tirage (14).

4. Store à enrouleur selon l'une quelconque des revendications 1 à 3, **caractérisé en ce que** ladite barre de tirage (14) et/ou la ou desdites biellettes (15) comprennent des moyens d'appui (16) sur une baie vitrée (12) et/ou sur un élément de carrosserie.

5. Store à enrouleur selon la revendication 4, **caractérisé en ce que** lesdits moyens d'appui (16) comprennent au moins une roulette et/ou au moins un patin.

6. Store à enrouleur selon l'une quelconque des revendications 1 à 5, **caractérisé en ce que** la ou lesdites biellettes (15) sont actionnées par un moteur.

## Claims

1. Roller blind of the type having a curtain (13) of which a first end is integral with a roller tube and a second end is integral with a pull bar (14), the displacement and/or retention of the said pull bar (14) taking place under the action of at least one small rod (15),
the said pull bar (14) being capable of adopting at least two distinct positions about its longitudinal axis or an axis substantially parallel to the latter,
**characterised in that** the said bar (14) and the said small rod (15) comprise linking means which cooperate in such a way as to form a sliding pivot link between the said bar and the said small rod about the longitudinal axis of the said pull bar (14) or a substantially parallel axis.

2. Roller blind according to claim 1, **characterised in that** one end of the said small rod or rods (15) has a runner (151) which is capable of sliding and pivoting within a slide (141) arranged in the said pull bar (14).

3. Roller blind according to claim 1, **characterised in that** one end of the said small rod or rods forms a U (152) which is capable of sliding and pivoting on a longitudinal bead (142) which has a substantially rounded cross-section and is formed on the said pull bar (14).

4. Roller blind according to any of claims 1 to 3, **characterised in that** the said pull bar (14) and/or the said small rod or rods (15) comprise(s) means of support (16) on a glazed opening (12) and/or on a bodywork element.

5. Roller blind according to claim 4, **characterised in that** the said means of support (16) comprise at least one caster and/or at least one pad.

6. Roller blind according to any of claims 1 to 5, **characterised in that** the said small rod or rods (15) is/are actuated by a motor.

## Patentansprüche

1. Fensterrollo in Ausführung mit einer Rollobahn (13), von der ein erstes Ende an ein Wickelrohr und ein zweites Ende an eine Zugleiste (14) angrenzt, wobei die Verschiebung und/oder die Abstützung der Zugleiste (14) durch das Wirken mindestens eines Armes (15) erfolgt, wobei die Zugleiste (14) dazu ausgebildet ist, mindestens zwei unterschiedliche Stellungen um ihre Längsachse oder um eine im Wesentlichen parallel zu dieser ausgerichteten Achse einzunehmen,
**dadurch gekennzeichnet, dass** die Leiste (14) und der Arm (15) Verbindungsmittel umfassen, die derart zusammenwirken, dass eine Drehverbindung gebildet wird, die zwischen der Leiste und dem Arm um die Längsachse der Zugleiste (14) oder um eine im Wesentlichen parallele Achse gleitet.

2. Fensterrollo nach Anspruch 1, **dadurch gekennzeichnet, dass** ein Ende des Armes oder der Arme (15) ein Gleitstück (151) aufweist, welches dazu ausgebildet ist, in einer in der Zugleiste (141) vorgesehenen Gleitführung (14) zu gleiten und zu drehen.

3. Fensterrollo nach Anspruch 1, **dadurch gekennzeichnet, dass** ein Ende des Armes oder der Arme ein U (152) bildet, welches dazu ausgebildet ist, auf einer längsverlaufenden Fensterdichtung (142) im Wesentlichen runden Querschnitts zu gleiten und zu drehen, die auf der Zugleiste (14) ausgebildet ist.

4. Fensterrollo nach einem der Ansprüche 1 bis 3, **dadurch gekennzeichnet, dass** die Zugleiste (14) und/oder der Arm oder die Arme (15) Auflagemittel (16) zur Auflage auf einem Glasfenster (12) und/oder auf einem Karosseriebestandteil umfassen.

5. Fensterrollo nach Anspruch 4, **dadurch gekennzeichnet, dass** die Auflagemittel (16) mindestens ein Rädchen und/oder mindestens einen Schuh aufweisen.

6. Fensterrollo nach einem der Ansprüche 1 bis 5, **dadurch gekennzeichnet, dass** der Arm oder die Arme (15) von einem Motor angetrieben werden.
